Europäisches Patentamt

European Patent Office

Office européen des brevets

(11) Publication number: **0 084 760**
**A1**

## (12) EUROPEAN PATENT APPLICATION

(21) Application number: **82830016.0**

(22) Date of filing: **27.01.82**

(51) Int. Cl.³: **A 61 C 8/00**

(43) Date of publication of application: **03.08.83**
**Bulletin 83/31**

(84) Designated Contracting States: **DE FR GB IT NL**

(71) Applicant: **Elaborati, Luciano, Via Emilia, 168,**
**I-40068 San Lazzaro di Savena-(Bologna) (IT)**

(72) Inventor: **Elaborati, Luciano, Via Emilia, 168, I-40068 San**
**Lazzaro di Savena-(Bologna) (IT)**

(74) Representative: **Sassatelli, Franco, c/o INIP Ufficio**
**Internazionale Brevetti per Deposito di Brevetti e Marchi**
**via Mazzini, 170, I-40139 Bologna (IT)**

(54) **Extra-bone device for mobile prosthesis retention.**

(57) This device enables the partial or total replacement of the teeth by means of one or more surface stabilizers in plate in rider shape (1) which are set with the adherence fins (3, 4) on the arcade bone previously adapted to the shape to permit the support on a threade bore (2), intermediate to the summit (1), with a screw fastening of pillar (12, 13) for prosthesis anchorage. The integral condition is obtained by means of a pair of screws (8, 9) transversally passing in parfallel in the bone, which engaging in correspondence threaded bores (10, 11) fasten the fin pair (3, 4). The stabilizer are then covered with the mucous membrane of the gum.

- 1 -

"Extra-bone device for mobile prosthesis retention.

The invention refers to a retention device for mobile prosthesis to be applied with containment envelope in condition of intimate wall adherence,which substantially permits,by outer connexion to the arcade portion,to absorb the deformed strains transmitted by the prosthesis borne by a pillar screwed in a bore intermediate in the summit of the said stabilizer.

By differently setting the above device on arcade sections,the partial or total remplacement of the teeth is possible.In order to completely replace the teeth in a teeth less mouth,at present either mobile or fixed prosthesis are employed.The mobile prosthesis system foresees the initial relief of mucous membrane impression,for instance with a ginate,and subsequently the articulation form is determined with wax plates.The wax cast mounting is then tried and the adjustments are carried out.This matrix allows to form the prosthesis in acrylic resins; these ones are then applied to the mouth cavity by means of stabilizers.This type of prosthesis is liable to disconnections since they are laid on moving parts and are adapted with difficulty to the patient who feels the presence of a foreign matter.The system of fixed or implantologic prosthesis foresees the introduction of the supports in general in the bone marrow,consisting in titanium laminae or roots of several kinds,having stumps in projecting part to which the prosthesis are engaged.This system permits the prosthesis assembling,but on account of the chewing charge,with the time the installation is disconnected with the consequent necessity of removing it.

The non-confidability of these devices in particular is due to the li mited consistency of the bone marrow and to the employ of a stabilizing means anchored to a binding point.

The invention allows the solution of the problem by replacing the stabilization on binding point with another with a charge uniformly divided on the outer bone structure of the arcade,avoiding in this way the transmission of strains inside unhinging in it.The device employs three essential parts.

Its fitting is possible by means of a surface stabilizer with lamellar envelope,in rider shape,set for containing a portion of the arcade end in condition of intimate wall adherence in order to allow the uniform distribution of the chewing load by means of the outer connection to the bone.To get the condition of intimate adherence,after having removed the gum mucous membrane, some milling is foreseen,if required,for shape adjustment.

The binding condition integrally operating of the stabilizer to the bone is made possible by a pair of screws transversally passing in parallel in the bone for blocking the fins,by introducing themselves into corresponding threaded bores.

On a longitudinal intermediate point of the stabilizer summit,a threaded bore is foreseen for fitting a removable pillar for prosthesis anchoring.With reference to the different conformation of the two arcade bones,the relevant stabilizing parts will have fin pairs with different shape.

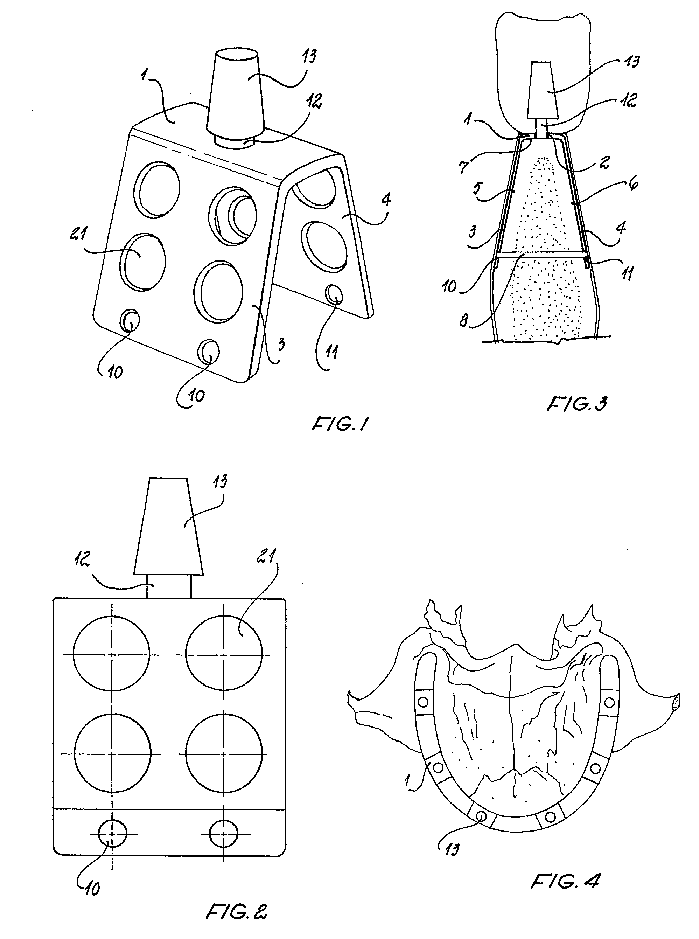

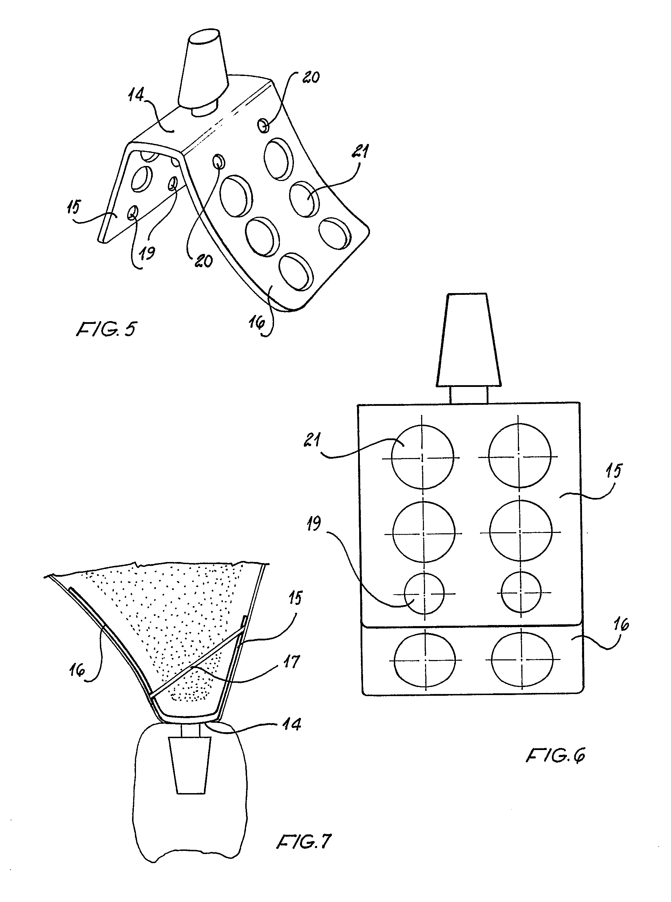

Execution version,not limiting,is illustrated by Tables 1 and 2,where Fig.1 is perspective view of a rider device for the lower arcade use. Fig.2 is the relevant side view.Fig.3 is the transversal section of the upper part of the lower arcade with the fitted device as per the previous figures,bearing one prosthesis.Fig.4 is the view of the lower arca de with six stabilizers preset for enabling the complete replacement of the arcade teeth.Fig.5 is the perspective view of a rider device for the upper arcade employ;Fig.6 is the side view of the same.Fig.7 is the transversal section of the bottom part of the top arcade.In the figures are particularly to be noted the different shape of the two fin pairs to allow the adjustment to the arcade,and on the same the pairs of bores required for fitting the passing fixing screws,as well as the system of bores for structure lightening.the version employs for the bottom arcade a stabilizer with summit 1 and threaded bore 2 with symmetrical converging containment fins 3 and 4.For adjustment,the milling of the correspondence cortical walls 5,6 and 7 is foreseen.This enables the stabilizer fitting on the bone in condition of intimate wall adherence required for obtaining the connection of the two parts.The binding condition,integrally operating is permitted by the pair of screws 8 and 9 which connect fins 3 and 4 by screwing in the two pairs of threaded bores 10 and 11.In threaded bore 2 of top 1 in thicker lamina of the fins 3 and 4,the small threaded cylinder 12 is foreseen to be screwed in,which above it bears the prosthesis anchoring piece 13 in the shape of a truncated cone.For the upper arcade a stabilizer is foreseen with analogous summit in a rider shape 14 with side fins 15 and 16 for containment,respectively the first one for adherence on the outer part and the second according to the palate conformation.in an analogous way the adjustment millings are performed on the leaning part of the bone.The integrally operating tie is possible through the pair of screws 17 and 18 which are blocking the fins in the two pairs of threaded bores of correspondence 19 and 20.On the containment fins of the devices,openings 21 for lightening are foreseen to permit inside adherence zone of the gum mucous membrane to the bone of the arcade to increase the device stability.

By fitting a set of devices at intervals in a teethless mouth,it is possible to have a retention structure available for mounting all the theeth of the arcade.These prosthesis in condition of employ turn out to integrally operating with the arcade bone and can be removed separately by un

- 4 -

screwing for the restoring operations.The shape of the rider stabilizer, of the blocking means,of the anchoring pillar,as well as the materials may be foreseen in different ways.

- 1 -

# 0084760

<u>Claims</u>:

1) Extra-bone device for mobile prosthesis retention, characterized by the fact that its fitting is possible by means of a surface stabilizer with lamellar envelope, in rider shape, set for containing a portion of the arcade end in condition of intimate wall adherence in order to allow the uniform distribution of the chewing load by means of the outer connection to the bone. To get the condition of intimate adherence, after having removed the gum mucous membrane, some milling is foreseen, if requieres, for shape adjustment. The binding condition integrally operating of the stabilizer to the bone is made possible by a pair of screws transversally passing in parallel in the bone for blocking the fins, by introducing themselves into corresponding threaded bores. On a longitudinal intermediate point of the stabilizer summit, a threaded bore is foreseen for fitting a removable pillar for prosthesis anchoring.

2) Extra-bone device for mobile prosthesis retention, according to the previous claim, characterized by the fact that with reference to the different conformation of the two arcade bones, the relevant stabilizing parts will have fin pairs with different shape.

3) Extra- bone device for mobile prosthesis retention, according to the previous claims, characterized by the fact that the version employs for the bottom arcade a stabilizer with summit 1 and treaded bore 2 with symmetrical convering containment fins 3 and 4. For adjustment, the milling of the correspondence cortical walls 5, 6 and 7 is foreseen. This enables the stabilizer fitting on the bone in condition of intimate wall adherence required for obtaining the connection of the two parts. The binging condition, integrally operanting is permitted by the pair of screws 8 and 9 which connect fins 3 and 4 by screwing in the two pairs of threaded bores 10 and 11. In threaded bore 2 of top 1 i thicker lamina of thefins 3 and 4, the small threaded cylinder 12 is foreseen to be screwed in, which above it bears the prosthesis anchoring piece 13 in the shape of a truncated cone.

4) Extra-bone device for mobile prosthesis retention, according to the previous claims, characterized by the fact that for the upper arcade a stabilizer is foreseen with analogous summit in a rider shape 14 with side fins 15 and 16 for containment, respectively the first one for adherence on the outer part and the second according to the palate conformation. In an anlogous way the adjustment millings are performed on the leaning part of the bone. The integrally operating tie is possible through the pair of screws 17 and 18 which are blocking the fins in the two pairs of threaded bores if correspondence 19 and 20.

5) Extra-bone device for mobile prosthesis retention, according to the previous claims, characterized by the fact that on the containment fins of the devices, openings 21 for lightening are foreseen to permit inside adherence zone of the gum mucous membrane to the bone of the arcade to increase the device stability.

6) Extra-bone device for mobile prosthesis retention, according to the previous claims, characterized by the fact that by fitting a set of devices at intervals in a teethless mouth, it is possible to have a retention structure available for mounting all the theeth of the arcade. These prosthesis in condition of employ turn out ot integrally operating with the arcade bone and can be removed separately by unscrewing for the restoring operations.

FIG.1

FIG.3

FIG.2

FIG.4

FIG. 5

FIG.6

FIG.7

0084760

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 081 908  (SNEER)<br>* Column 1, line 65 - column 2, line 2; column 3, lines 25-28; column 4, lines 14-20; figures 1,7 * | 1,3,4 | A 61 C    8/00 |
| Y |  | 5,6 |  |
| Y | US-A-3 579 829  (SAMPSON)<br>* Column 4, lines 29-75; figures 3,4 * | 1 |  |
| Y | US-A-2 467 163  (SKINNER)<br>* Column 2, lines 7-8; figure 1 * | 1 |  |
| Y | US-A-3 082 525  (CHRISTENSEN)<br>* Column 3, line 75 - column 4, line 6; figures 1,2 * | 5 | TECHNICAL FIELDS SEARCHED (Int. Cl. 3) |
| Y | US-A-3 514 858  (SILVERMAN)<br>* Column 1, lines 11-24; abstract; figure 1 * | 6 | A 61 C |

The present search report has been drawn up for all claims

| Place of search | Date of completion of the search | Examiner |
|---|---|---|
| THE HAGUE | 17-09-1982 | DURAND-SMET J.E.J.S. |